# EUROPEAN PATENT APPLICATION

(11) **EP 4 559 815 A1**
(43) Date of publication of application: **28.05.2025**
(21) Application number: 23211506.3
(22) Date of filing: 22.11.2023
(51) Int. Cl.: B64D 47/04

(54) **AIRCRAFT HEADLIGHT AND AIRCRAFT COMPRISING AN AIRCRAFT HEADLIGHT**

(71) Applicant: Goodrich Lighting Systems GmbH & Co. KG, 59557 Lippstadt (DE)
(72) Inventor: Kumar, Anil Kumar, 59555 Lippstadt (DE); Hessling-von Heimendahl, Andre, 56073 Koblenz (DE); Leuschner, Jens, 59519 Möhnesee (DE); Ronstedt, Markus, 59590 Geseke (DE)
(74) Representative: Schmitt-Nilson Schraud Waibel Wohlfrom Patentanwälte Partnerschaft mbB

(57) **Abstract**

An aircraft headlight (2) comprises a housing (10); a retractable light emission unit (12), which is movable with respect to the housing (10) between a stowed position and an operating position; an electric motor (14), which is stationary with respect to the housing (10); and a crankshaft (18), coupled to the electric motor (14) and coupled to the retractable light emission unit (12) via a connecting rod (20); wherein the electric motor (14) is configured to move the retractable light emission unit (12) between the stowed position and the operating position via the crankshaft (18) and the connecting rod (20).

## Description

The present invention is in the field of exterior aircraft lighting. In particular, the present invention is in the field of aircraft headlights and aircraft comprising aircraft headlights.

Almost all aircraft are equipped with numerous lights, including exterior aircraft lights and interior aircraft lights. In particular, large passenger air planes are provided with a wide variety of exterior and interior aircraft lights.

Exterior aircraft lights are employed for a wide variety of different purposes, such as for allowing the passengers and/or air crew to view the outside, for passive visibility, for signaling purposes, etc. Examples of such exterior aircraft lights are navigation lights, also referred to as position lights, red-flashing beacon lights, white strobe anti-collision lights, wing scan lights, take-off lights, landing lights, taxi lights, runway turn-off lights, etc.. Take-off lights, landing lights, taxi lights, and runway turn-off lights are often jointly referred to as aircraft headlights.

Exterior aircraft lights are heavily space-constrained, because space is a highly scarce resource within the aircraft body. The space concerns are particularly worrisome in aircraft headlights for a number of reasons. Aircraft headlights tend to be larger than other kinds of exterior aircraft lights, because they provide a comparably high light intensity, which leads to comparably large light generation, light conditioning, and cooling arrangements. Also, aircraft headlights tend to be installed in space-sensitive portions of the aircraft. For example, they may be mounted to the aircraft running gears, thus occupying valuable space in the running gear compartments of the aircraft when folded away during flight. In other implementations, aircraft headlights are provided in the wings or in the wing roots of the aircraft, where space is also a highly scarce resource. The space concerns are particularly pressing in high speed aircraft, which have a very small front surface area and very thin wings. The challenge in such high speed aircraft is further aggravated by the fact that the aircraft headlights need a high mechanical stability due to the high speeds of the aircraft.

It would therefore be beneficial to provide an aircraft headlight that combines a low space envelope with high mechanical stability, when in the operating position. Also, it would be beneficial to provide an aircraft equipped with such an aircraft headlight.

Exemplary embodiments of the invention include an aircraft headlight, comprising a housing; a retractable light emission unit, which is movable with respect to the housing between a stowed position and an operating position; an electric motor, which is stationary with respect to the housing; and a crankshaft, coupled to the electric motor and coupled to the retractable light emission unit via a connecting rod; wherein the electric motor is configured to move the retractable light emission unit between the stowed position and the operating position via the crankshaft and the connecting rod.

Exemplary embodiments of the invention allow for the provision of an aircraft headlight whose retractable light emission unit has high mechanical stability in the operating position, while the aircraft headlight can be implemented with a comparably small space envelope. With the crankshaft and the connecting rod, the retractable light emission unit can be held in the operating position with a comparably small force. The external forces acting onto the retractable light emission unit, which may include aero-drag forces, aero-lift forces, friction, icing and birdstrike events, may be balanced / absorbed in a particularly efficient manner. The retractable light emission unit may be held in the operating position, even at high speeds of the aircraft and, thus, high aerodynamic forces, without having to generate excessive counterforces via the electric motor. The set-up of the aircraft headlight may allow for the positioning of the aircraft headlight in highly space-constrained portions of the aircraft, such as the wing roots or the wings of the aircraft, even in the case of very thin wings of a high speed aircraft.

The aircraft headlight comprises a housing. The housing is a structure that is mountable to the aircraft and that is stationary within the aircraft frame of reference. The housing may have a mounting structure, such as a mounting ring, with which it may be fixed to the aircraft, in particular to the skin of the aircraft fuselage / aircraft wings / aircraft wing roots.

The aircraft headlight has a retractable light emission unit. The retractable light emission unit is configured to provide an aircraft headlight light output in operation. The retractable light emission unit may have various functional components of the aircraft headlight, such as one or more light sources, one or more light conditioning elements / optical elements, cooling means, etc., as will be laid out in more detail below.

The aircraft headlight comprises an electric motor that is stationary with respect to the housing. The expression of the electric motor being stationary with respect to the housing means that the electric motor as a whole, i.e. the electric motor as a high level component, is stationary with respect to the housing. As any electric motor, the electric motor of the aircraft headlight has moving parts, such as a rotor, which move with respect to the remainder of the electric motor and, thus, with respect to the housing.

The electric motor is coupled to the crankshaft. The electric motor may be directly coupled to the crankshaft or may be coupled to the crankshaft via one or more other components, such as via a reduction gear. The electric motor or the reduction gear may have an output shaft that is coupled to the crankshaft. It is also possible that the electric motor or the reduction gear has an output shaft that is formed integrally with the crankshaft. Such integral implementation of the output shaft of the electric motor / reduction gear and the crankshaft is also understood as an embodiment of the electric motor being coupled to the crankshaft.

The electric motor may be configured to rotate its output shaft in one direction or in two directions. Due to the provision of the crankshaft and the connecting rod, providing an electric motor with an output rotation in one direction only may be sufficient for both extracting and retracting the retractable light emission unit.

The aircraft headlight has a crankshaft, which is coupled to the electric motor on the one hand and which is coupled to the retractable light emission unit on the other hand. The crankshaft is coupled to the retractable light emission unit via a connecting rod. The expression of the crankshaft being coupled to the retractable light emission unit via a connecting rod means that a connecting rod is present between the crankshaft and the retractable light emission unit. This connecting rod may be the single connecting element between the crankshaft and the retractable light emission unit. However, it is also possible that the coupling comprises other elements besides the connecting rod. In an example, which will be described in more detail below, the crankshaft is coupled to the retractable light emission unit by two connecting rods, which have a bell crank interposed therebetween. Such an arrangement is also understood as falling under the expression of the crankshaft being coupled to the retractable light emission unit via a connecting rod.

The crankshaft may have a crankpin, to which the connecting rod is coupled. As stated above, the connecting rod may in turn be coupled directly to the retractable light emission unit or via other elements. The crankpin is understood as that part of the crankshaft that rotates eccentrically with respect to the axis of rotation of the crankshaft. The crankpin may extend through a bore / through an eye of the connecting rod at a first end portion thereof. The crankpin may also be referred to as a connecting rod journal.

According to a further embodiment, the retractable light emission unit comprises a base plate, which is pivotable with respect to the housing. The base plate may support various functional components of the retractable light emission unit. In particular, the base plate may support one or more light sources, one or more light conditioning elements / optical elements, such as one or more reflectors and/ or one or more lenses and/or one or more shutters. The base plate may further support a cover arrangement, protecting functional components of the retractable light emission unit from the outside environment and allowing the light output of the retractable light emission unit to leave the aircraft headlight. Further, the base plate may support cooling means, such as cooling ribs and/or other cooling elements, and/or may support power supply components, such as power supply connections to the one or more light sources.

The base plate may comprise a fixed portion, which is coupled to the housing, and a movable portion. The fixed portion may be fixed to the housing in any suitable manner, such as via a suitable hinge. The movable portion may move freely with respect to the housing, constrained by the stroke of the connecting rod, which in turn is coupled to the crankshaft. The crankshaft may be coupled to the movable portion of the base plate via the connecting rod.

The base plate may be positioned within the housing, when the retractable light emission unit is in the stowed position, and may be substanially flush with the skin of the aircraft, when the retractable light emission unit is in the operating position. In addition to being constrained by the stroke of the connecting rod, the base plate may move between two stops of the housing. The stops may be implemented as abutment surfaces, such that the base plate engages with the housing in a well-defined manner in the stowed position and in the operating position.

According to a further embodiment, the connecting rod is substantially orthogonal with respect to the base plate, when the retractable light emission unit is in the operating position. In particular, the connecting rod may be at an angle of between 80° and 100°, further in particular at an angle of between 85° and 95°, yet further in particular at an angle of between 88° and 92°, yet further in particular at an angle of about 90°, with respect to the base plate, when the retractable light emission unit is in the operating position. The expression of the connecting rod being substantially orthogonal with respect to the base plate, when the retractable light emission unit is in the operating position, is understood as the connecting rod being in the above mentioned angular range with respect to the base plate. When the connecting rod is in a substantially orthogonal position with respect to the base plate, a comparably large force is required for starting the connecting rod and, thus, the crankshaft to move. In this way, a comparably large holding force is present at the base plate, helping to keep the retractable light emission unit in the operating position.

According to a further embodiment, the crankshaft comprises a crankpin, and the connecting rod is connected to the crankpin of the crankshaft. The crankpin may be substantially in its first dead center, also referred to as the first dead point, when the retractable light emission unit is in the stowed position. In addition / alternatively, the crankpin may be substantially in its second dead center, also referred to as the second dead point, when the retractable light emission unit is in the operating position. By associating the stowed position and/or the operating position with the first dead center and/or the second dead center of the crankpin, a particularly stable resting of the retractable light emission unit in the stowed position and/or in the operating position may be achieved. The first dead center and the second dead center are those positions of the crankpin where the highest torque / force is required for moving the connecting rod and the crankshaft. The arrangement of the crankshaft and the connecting rod help the retractable light emission unit to withstand external forces and to maintain the desired position. The first dead center may also be referred to as the upper dead center / upper dead point, and the second dead center may also be referred to as the lower dead center / lower dead point. The expressions of upper dead center and lower dead center correspond to the orientation of the aircraft headlight, when installed at the bottom of a wing / wing root / fuselage of the aircraft.

According to a further embodiment, the aircraft headlight comprises a bell crank, wherein the crankshaft is coupled to the bell crank via a first connecting rod and wherein the bell crank is coupled to the movable portion of the base plate via a second connecting rod. The bell crank may have two lever portions, which may be embodied as two legs. With the two lever portions, the torque may be adapted between the first connecting rod and the second connecting rod. In this way, a particularly suitable holding force may be set and applied to the retractable light emission unit, when in the stowed position and/or when in the operating position. Also, with the bell crank, the stroke orientation may be changed between the first connecting rod and the second connecting rod. In this way, the electric motor and the crankshaft may be positioned closer to the retractable light emission unit, and an overall even more compact design of the aircraft headlight may be achieved. In particular, an aircraft headlight with an even smaller height extension may become possible.

According to a further embodiment, the first connecting rod is substantially aligned with the base plate, when the retractable light emission unit is in the operating position. In particular, the first connecting rod may be oriented at an angle of between -20° and 20°, in particular at an angle of between -10° and 10°, with respect to the base plate, when the retractable light emission unit is in the operating position. The expression of the first connecting rod being substantially aligned with the base plate is understood as the first connecting rod having an orientation within the mentioned angular range. With the first connecting rod being arranged in this manner, a particularly low height dimension of the aircraft headlight may be achieved.

According to a further embodiment, the crankshaft comprises a crankpin, and the first connecting rod is connected to the crankpin. The crankpin may be substantially in its first dead center, when the retractable light emission unit is in the stowed position, and/or the crankpin may be substantially in its second dead center, when the retractable light emission unit is in the operating position.

According to a further embodiment, the base plate is hinged with respect to the housing with a spring steel sheet. By using a spring steel sheet as the hinge between the base plate and the housing, traditional types of hinges, such as hinges with hinge pins, may be eliminated. By eliminating such conventional hinges, common failures, such as breaking hinge pins, can be prevented. The spring steel sheet may in particular be a bendable spring steel sheet.

The spring steel sheet may abut the base plate with a first portion of the spring steel sheet and may abut a wall of the housing with a second portion of the spring steel sheet. The first portion and the second portion of the spring steel sheet may be mounted to the base plate and the housing, respectively. In this way, the spring steel sheet may have an extended surface, over which the spring steel sheet is mounted to the base plate and to the wall of the housing, respectively.

According to a further embodiment, the spring steel sheet is bent at a bending line, when the retractable light emission unit is moved between the stowed position and the operating position. The bending line may form the pivot axis along which the base plate is pivotable with respect to the housing. The bending line may be the border between the above mentioned first and second portions of the spring steel sheet. The bending line may separate the spring steel sheet in two portions of substantially equal size. In this way, equal or similar abutment / mounting surfaces may be available for attaching the spring steel sheet to the base plate and to the housing.

According to a further embodiment, the bending angle between the first portion of the spring steel sheet and the second portion of the spring steel sheet changes by less than 30°, in particular by between 10° and 30°, when the retractable light emission unit is moved between the stowed position and the operating position. In this way, the repeated bending of the spring steel sheet during extended operation of the aircraft headlight may be below the fatigue limit of the spring steel sheet. This in turn may allow for the hinging with the spring steel sheet to work in a highly reliable and highly durable manner.

According to a further embodiment, the spring steel sheet has a width of between 50 mm and 200 mm, in particular of between 100 mm and 150 mm. Instead of a single spring steel sheet with such a width, it is also possible to provide two spring steel sheets side-by-side, wherein each of the two spring steel sheets has a width of between 25 mm and 100 mm, in particular of between 50 mm and 75 mm.

According to a further embodiment, the spring steel sheet(s) has / have a length of between 50 mm and 120 mm, in particular a length of between 60 mm and 100 mm. That length of the spring steel sheet(s) may extend substantially equally to both sides of above described bending line.

According to a further embodiment, the spring steel sheet(s) has / have a thickness of between 0.5 mm and 2 mm, in particular a thickness of between 0.8 mm and 1.5 mm.

According to a further embodiment, the spring steel sheet is made from spring steel, which is known to the skilled person as a common material for steel springs.

According to a further embodiment, the base plate is vertically hinged with respect to the housing. In particular, the base plate may be hinged on a wall of the housing that is oriented substantially vertically in the mounted position of the aircraft headlight. The base plate being vertically hinged may mean that the spring steel sheet is bent at an angle of between 60° and 120°, in particular at an angle of between 70° and 110°, further in particular at an angle of between 80° and 100°, when the retractable light emission unit is in the operating position.

According to a further embodiment, the base plate is horizontally hinged with respect to the housing. In particular the base plate may be hinged on a wall of the housing that is oriented substantially horizontally in the mounted position of the aircraft headlight. The base plate being horizontally hinged may mean that the spring steel sheet is stretched out in a substantially flat manner, when the retractable light emission unit is in the operating position. In particular, the spring steel sheet may have a bending angle of less than 20°, in particular of less than 10°, at the bending line.

According to a further embodiment, the base plate may be forward hinged or rearward hinged. In other words, it is possible that the forward end portion of the base plate is the fixed portion of the base plate and the rearward end portion of the base plate is the movable portion of the base plate, and it is possible that the forward end portion of the base plate is the movable portion of the base plate and the rearward end portion of the base plate is the fixed portion of the base plate. For both the forward hinged arrangement and the rearward hinged arrangement, it is possible that the base plate is vertically hinged or horizontally hinged.

It is pointed out that the provision of a spring steel sheet as the hinge between the base plate of the retractable light emission unit and the housing of the aircraft headlight, as disclosed herein, is considered its own invention. In particular, is is explicitly disclosed that an aircraft headlight, having a spring steel sheet, as disclosed in any of the embodiments herein, may be implemented without the crankshaft and the further features associated therewith. In other words, the provision of the spring steel sheet is considered its own invention, irrespective of whether the movement of the retractable light emission unit between the stowed position and the operating position is carried out with the help of a crankshaft and an associated connecting rod or not.

According to a further embodiment, the retractable light emission unit comprises at least one light source and at least one optical element, wherein the at least one light source and the at least one optical element are arranged to provide an aircraft headlight light output in operation. The at least one optical element may in particular be at least one reflector. In general, the at least one optical element may comprise one or more reflectors and/or one or more lenses and/or one or more shutters. It is possible that the retractable light emission unit comprises a plurality of building blocks, wherein each building block comprises a light source and an optical element, such as a light source and a reflector.

According to a further embodiment, the at least one light source is at least one LED.

According to a further embodiment, the retractable light emission unit comprises a cover arrangement, arranged over the at least one light source and the at least one optical element, wherein the cover arrangement comprises a light transmissive cover portion for passing the aircraft headlight light output in operation. The light transmissive cover portion may be a forward cover portion, passing the aircraft headlight light output in a forward direction. The cover arrangement may further comprise a rearward cover portion. The rearward cover portion may also be light transmissive or may be opaque.

According to a further embodiment, the cover arrangement is shaped to be substantially flush with an outer skin of the aircraft, to which the aircraft headlight is mounted, when the retractable light emission unit is in the stowed position.

According to a further embodiment, the housing is sized and shaped to fit into a recess in an aircraft wing and/or into a recess in an aircraft wing root and/or into a recess in an aircraft fuselage of an aircraft.

According to a further embodiment, the aircraft headlight is a take-off light or a landing light or a runway turn-off light or a taxi light or a multi-functional aircraft headlight, comprising the functionalities of at least two of a take-off light, a landing light, a runway turn-off light and a taxi light. The multi-functional aircraft headlight may in particular comprise the functionalities of any two or any three or all four of a take-off light, a landing light, a runway turn-off light and a taxi light. In case the aircraft headlight is a take-off light, the retractable light emission unit is configured to provide a take-off light light output in operation. In case the aircraft headlight is a landing light, the retractable light emission unit is configured to provide a landing light light output in operation. In case the aircraft headlight is a runway turn-off light, the retractable light emission unit is configured to provide a runway turn-off light light output in operation. In case the aircraft headlight is a taxi light, the retractable light emission unit is configured to provide a taxi light light output in operation. In case the aircraft headlight is a multi-functional aircraft headlight, the aircraft headlight may have separate lighting systems that provide the respective light outputs.

Exemplary embodiments of the invention further include an aircraft that comprises at least one aircraft headlight, as described in any of the embodiments above. The additional features, modifications and effects, described above with respect to the aircraft headlight, apply to the aircraft in an analogous manner. The aircraft may in particular be an air plane, more in particular a commercial passenger air plane. The aircraft may also be a rotorcraft / helicopter.

According to a further embodiment, the aircraft comprises a wing-mounted aircraft headlight, which is an aircraft headlight as described in any of the embodiments above, wherein the wing-mounted aircraft headlight is mounted to a lower portion of a wing of the aircraft, with the retractable light emission unit being substantially flush with a skin of the lower portion of the wing of the aircraft, when the retractable light emission unit is in the stowed position. The aircraft may in particular comprise a plurality of such wing-mounted aircraft headlights, for example one such wing-mounted aircraft headlight per wing.

According to a further embodiment, the aircraft comprises a wing-root-mounted aircraft headlight, which is an aircraft headlight as described in any of the embodiments above, wherein the wing-root-mounted aircraft headlight is mounted to a lower portion of a wing root of the aircraft, with the retractable light emission unit being substantially flush with a skin of the lower portion of the wing root of the aircraft, when the retractable light emission unit is in the stowed position. The aircraft may in particular comprise a plurality of such wing-root-mounted aircraft headlights, for example one such wing-root-mounted aircraft headlight per wing root.

According to a further embodiment, the aircraft comprises a fuselage-mounted aircraft headlight, which is an aircraft headlight as described in any of the embodiments above, wherein the fuselage-mounted aircraft headlight is mounted to a lower portion of a fuselage of the aircraft, with the retractable light emission unit being substantially flush with a skin of the lower portion of the fuselage of the aircraft, when the retractable light emission unit is in the stowed position. The aircraft may in particular comprise a plurality of such fuselage-mounted aircraft headlights.

Further exemplary embodiments of the invention are described below with respect to the accompanying drawings, wherein:
Fig. 1 shows a schematic front view of an aircraft in accordance with an exemplary embodiment of the invention;
Fig. 2 shows a perspective view of an aircraft headlight in accordance with an exemplary embodiment of the invention, with the retractable light emission unit being in the operating position;
Fig. 3 shows a front view of the aircraft headlight of Fig. 2, with the retractable light emission unit being in the operating position;
Fig. 4A shows a longitudinal cross-sectional view of the aircraft headlight of Fig. 2, with the retractable light emission unit being in the operating position;
Fig. 4B shows the aircraft headlight of Fig. 2 in the longitudinal cross-sectional view of Fig. 4A, with the retractable light emission unit being in the stowed position;
Fig. 5A shows an aircraft headlight in accordance with a second exemplary embodiment of the invention in a longitudinal cross-section view, corresponding to the view of Fig. 4A, with the retractable light emission unit being in the operating position;
Fig. 5B shows the aircraft headlight of Fig. 5A in the same longitudinal cross-sectional view as Fig. 5A, with the retractable light emission unit being in the stowed position;
Fig. 6A shows an aircraft headlight in accordance with a third exemplary embodiment of the invention in a longitudinal cross-section view, corresponding to the view of Fig. 4A, with the retractable light emission unit being in the operating position;
Fig. 6B shows the aircraft headlight of Fig. 6A in the same longitudinal cross-sectional view as Fig. 6A, with the retractable light emission unit being in the stowed position;
Fig. 7A shows an aircraft headlight in accordance with a fourth exemplary embodiment of the invention in a longitudinal cross-section view, corresponding to the view of Fig. 4A, with the retractable light emission unit being in the operating position;
Fig. 7B shows the aircraft headlight of Fig. 7A in the same longitudinal cross-sectional view as Fig. 7A, with the retractable light emission unit being in the stowed position.

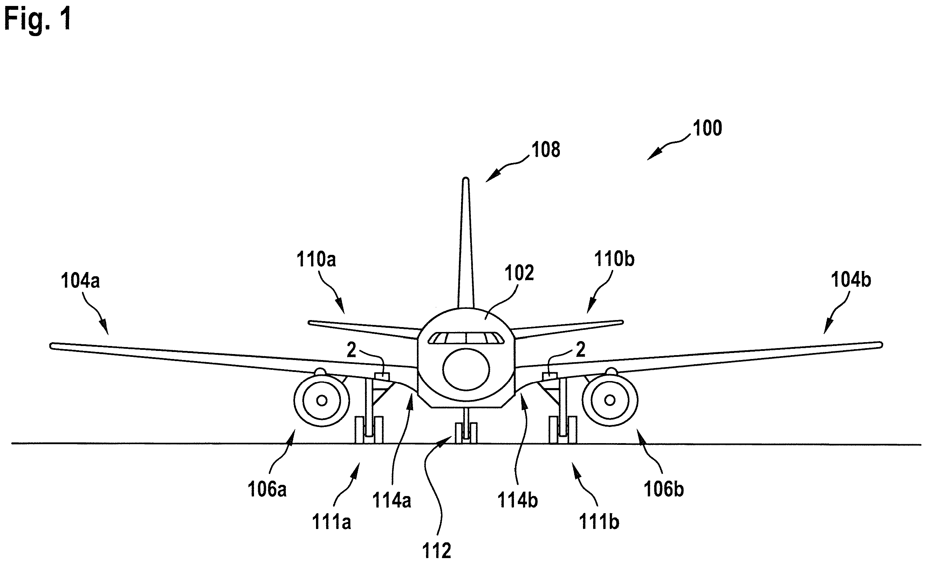

Figure 1 shows a schematic front view of an aircraft 100 in accordance with an exemplary embodiment of the invention. The aircraft 100 comprises two aircraft headlights 2 in accordance with an exemplary embodiment of the invention.

The aircraft 100 has a fuselage 102 and two wings 104a, 104b, extending laterally from the right and left sides of the fuselage 102. Each of the wings 104a, 104b supports an engine 106a, 106b. In further exemplary embodiments, which are not depicted in the figures, each of the wings 104a, 104b may support more than one engine. In particular, each of the wings 104a, 104b may support two or more engines. In further embodiments, one or more engines may be mounted to the fuselage 102 as well.

A vertical stabilizer 108 and two horizontal stabilizers 110a, 110b are mounted to a tail portion of the fuselage 102.

The aircraft 100 further comprises a landing gear configuration that includes two main running gears 111a, 111b, which are arranged under the wings 104a, 104b, and a front running gear 112, which is located under a front portion of the fuselage 102. Other landing gear configurations, in particular landing gear configurations comprising more than two main running gears, are possible as well.

An aircraft headlight 2 according to an exemplary embodiment of the invention is mounted to each of the wings 104a, 104b. The aircraft headlights 2 are positioned close to the wing roots 114a, 114b of the wings 104a, 104b. It is pointed out that the aircraft headlights 2 may also be provided at different positions within the aircraft 100, such as at the wing roots 114a, 114b or at the fuselage 102. Also, the aircraft 100 may have more than the depicted two aircraft headlights 2.

Each of the aircraft headlights 2 may be a take-off light, a landing light, a taxi light, a runway turn-off light, or a multi-functional aircraft headlight combining the functionalities of at least two of a take-off light, a landing light, a taxi light, and a runway turn-off light.

It is stressed again that the aircraft headlight configuration, as depicted in Fig. 1, is only exemplary and not limiting. In other words, other aircraft headlight configurations, comprising at least one aircraft headlight in accordance with an exemplary embodiment of the invention, are possible as well. In particular, aircraft headlights in accordance with exemplary embodiments of the invention may be mounted to other components of the aircraft 100 as well.

The aircraft 100 shown in Fig. 1 is an air plane, in particular a large commercial passenger or cargo air plane. It is pointed out that other types of aircraft, such as smaller air planes, may be equipped with aircraft headlights in accordance with exemplary embodiments of the invention as well. Aircraft headlights according to exemplary embodiments of the invention may also be mounted to helicopters or other types of rotorcraft.

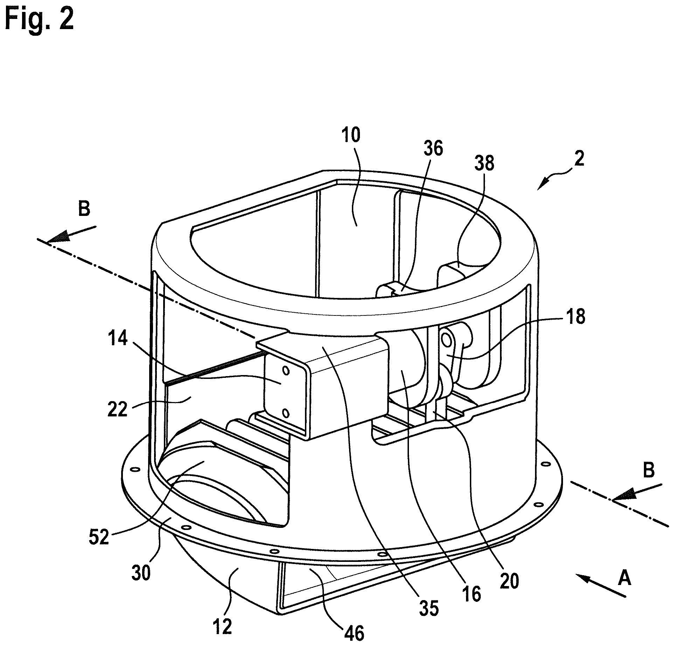

Fig. 2 shows an aircraft headlight 2 in accordance with an exemplary embodiment of the invention in a perspective view. The aircraft headlight 2 may be mounted to an underside of a wing of an aircraft, as is for example shown in Fig. 1. It may also be mounted to an underside of a fuselage of an aircraft or to an underside of a wing root of an aircraft.

The housing 10 has a substantially cylindrical shape, with a rear portion thereof being slightly truncated. The housing 10 may also have a cuboid shape or any other suitable shape. At a lower portion of the housing 10, a mounting ring 30 is provided. The mounting ring 30 has a plurality of mounting holes, distributed around the mounting ring 30. With the mounting holes, the housing and, thus, the aircraft headlight 2 may be mounted to the wing / wing root / fuselage of the aircraft. In particular, the mounting ring 30 may be mounted to a skin of the wing / wing root / fuselage of the aircraft. The mounting may be effected via any suitable mounting means, such as bolts, screws, rivets, etc. When mounted to the aircraft, the portion of the aircraft headlight 2 shown above the mounting ring 30 is provided within the wing / wing root / fuselage of the aircraft and not readily visible from the outside.

In the depicted exemplary embodiment of Fig. 2, the housing 10 does not have a closed outer structure, i.e. the housing 10 does not provide an enclosed inner space. Rather, the housing 10 has various cut-out portions in the side walls and in the top wall. In this way, the housing 10 may be provided at a comparably low weight, and a particularly good air flow for cooling the aircraft headlight 2 may be achieved. However, it is also possible to provide the housing 10 with continuos walls all around, which may lead to an enhanced mechanical stability and an enhanced protection of the components of the aircraft headlight 2.

The housing 10 comprises a motor support bracket 35, to which an electric motor 14 is mounted. In this way, the electric motor 14 is stationary with respect to the housing 10. The housing 10 further comprises a first crankshaft support bracket 36 and a second crankshaft support bracket 38. A reduction gear 16 is interposed between the motor support bracket 35 and the first crankshaft support bracket 36. A crankshaft 18 is arranged between the first crankshaft support bracket 36 and the second crankshaft support bracket 38.

In operation, the electric motor 14 generates a rotational movement, which is passed on to the crankshaft 18 via the reduction gear 16. In this way, the electric motor 14 is configured to rotate the crankshaft 18 in operation. The crankshaft 18 has a crankpin, which is not shown in Fig. 2. In operation, the crankpin may rotate between an upper dead center and a lower dead center.

The aircraft headlight 2 further comprises a retractable light emission unit 12. The retractable light emission unit 12 is movable between a stowed position, also referred to as a retracted position, and an operating position, also referred to as an extracted position. In Fig. 2, the retractable light emission unit 12 is shown in the operating position, i.e. in the extracted position.

The crankshaft 18 is coupled to the retractable light emission unit 12 via a connecting rod 20. In operation, the electric motor 14 can move the retractable light emission unit 12 between the stowed position and the operating position via the crankshaft 18 and the connecting rod 20. The stowed position of the retractable light emission unit 12 may be associated with the upper dead center of the crankpin of the crankshaft 18, and the operating position of the retractable light emission unit 12 may be associated with the lower dead center of the crankpin of the crankshaft 18.

The retractable light emission unit 12 comprises various functional components. In particular, the retractable light emission unit may comprise light generating means and light conditioning means, as will be described in more detail below. The light generating means and light conditioning means may be protected from the outside environment by a cover arrangement. Said cover arrangement may form the bottom of the retractable light emission unit 12. The cover arrangement has a light transmissive cover portion 46, through which the aircraft headlight light output is emitted in operation. The light transmissive cover portion 46 is the forward cover portion of the cover arrangement.

The retractable light emission unit 12 further comprises a plurality of cooling ribs 52. That plurality of cooling ribs 52 are in heat transfer relationship with the light generating means and are arranged to distribute and transport the heat, as generated during the operation of the aircraft headlight 2, away from the heat generating means.

The aircraft headlight 2 further comprises a spring steel sheet 22. Said spring steel sheet 22 acts as a hinge between the retractable light emission unit 12 and the housing 10. For this purpose, a first portion of the spring steel sheet 22 is attached to the retractable light emission unit 12, and a second portion of the spring steel sheet is attached to the housing 10. More details with respect to said spring steel sheet 22 will be described below.

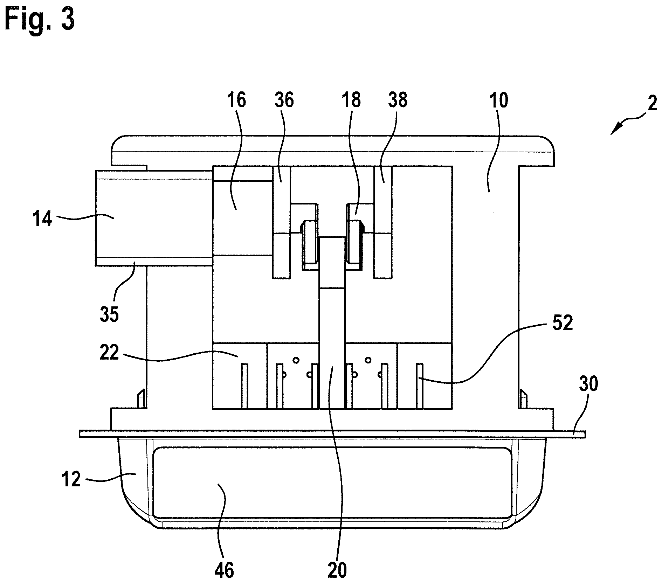

Fig. 3 shows a front view of the aircraft headlight 2 depicted in Fig. 2. The viewing direction of Fig. 3 is indicated by arrow A in Fig. 2.

As can be seen in Fig. 3, the light transmissive cover portion 46 of the cover arrangement of the retractable light emission unit 12 is substantially rectangular. Considering that the mounting ring 30 is mountable to the skin of the aircraft, it can be seen from Fig. 3 that the retractable light emission unit 12 has a very low profile, i.e. that the retractable light emission unit 12 is very small in the height dimension. In other words, when in the operating position, the retractable light emission unit 12 extends out of the wing / wing root / fuselage to a very small extent.

Also, it can be seen from Fig. 3 that the connecting rod 20 extends substantially straight down from the crankshaft 18 to the retractable light emission unit 12, with the crankpin of the crankshaft 18 being in the lower dead center, when the retractable light emission unit 12 is in the operating position.

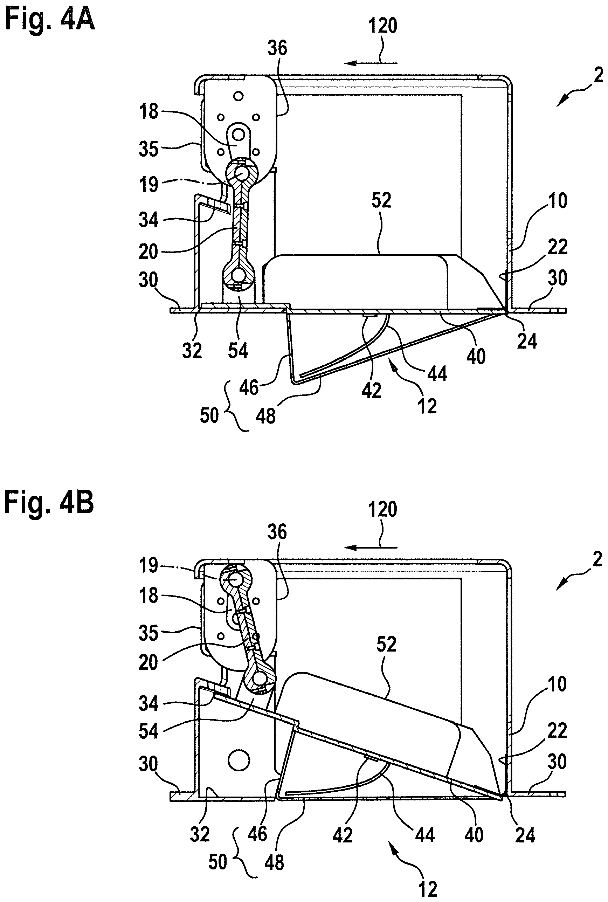

Fig. 4A shows the aircraft headlight 2 of Fig. 2 in a longitudinal cross-sectional view. In particular, Fig. 4A shows a cross-sectional plane that is vertical in the aircraft frame of reference and that runs through the aircraft headlight 2 in a front-to-rear direction in the aircraft frame of reference. The position of the cross-sectional plane and the viewing direction are indicated by a dashed line and arrows B-B in Fig. 2.

In Fig. 4A, the retractable light emission unit 12 is shown in the operating position, as it is shown in Fig. 2 and 3. The retractable light emission unit 12 is shown in more detail in Fig. 4A, as compared to Figs. 2 and 3, and will be described in more detail as follows.

The retractable light emission unit 12 comprises a base plate 40. In the depicted operating position of Fig. 4A, the base plate 40 is substantially flush with the mounting ring 30 of the housing 10 and, thus, substantially flush with the skin of the aircraft.

On its lower side, the base plate 40 supports a plurality of light sources 42, one of which being positioned in the cross-sectional plane of Fig. 4A, and a plurality of reflectors 44, one of which being shown in the cross-sectional plane of Fig. 4A. Each reflector 44 may have a parabolic or other suitable shape for collimating the light output of the associated light source 42 in a desired direction. For example, the reflector 44 may collimate the light towards a landing target, in case the aircraft headlight 2 is a landing light, or may provide for a wider light output distribution, in case the aircraft headlight 2 is a taxi light or a runway-turnoff light. While being separate functional components, the plurality of reflectors 44 may be implemented as an integrally formed component. Instead of / in addition to the plurality of reflectors 44, the retractable light emission unit 12 may have other optical elements, such as one or more lenses and/or one or more shutters.

The aircraft headlight light output, as provided by the plurality of light sources 42 and the plurality of reflectors 44, leaves the aircraft headlight 2 through the light transmissive cover portion 46 of a cover arrangement 50. Besides the light transmissive cover portion 46, the cover arrangement 50 comprises a rearward cover portion 48. Together, the light transmissive cover portion 46 and the rearward cover portion 48 enclose the plurality of light sources 22 and the plurality of reflectors 44 and protect said components from the outside environment of the aircraft. The cover arrangement 50 is also supported by the base plate 40.

On its upper side, the base plate 40 supports a plurality of cooling ribs 52. In the depicted exemplary embodiment, the plurality of cooling ribs 52 are vertical cooling ribs and are arranged substantially parallel to each other.

As stated above, the aircraft headlight 2 comprises a spring steel sheet 22, which acts as a hinge between the housing 10 and the retractable light emission unit 12. In the depicted exemplary embodiment, the spring steel sheet 22 acts as a hinge between a rear wall of the housing 10 and the base plate 40 of the retractable light emission unit 12. It may therefore also be said that the retractable light emission unit 12 is rearward hinged in the depicted exemplary embodiment. For the sake of clarity that the spring steel sheet 22 is provided in a rear end portion of the housing 10, a flight direction of the aircraft is indicated via arrow 120.

In the depicted exemplary embodiment, the base plate 40 is vertically hinged with respect to the housing 10. The expression of the base plate 40 being vertically hinged means that a first portion of the spring steel sheet 22 is mounted to the base plate 40 and a second portion of the spring steel sheet 22 is mounted to a vertical wall of the housing 10. In the depicted operating position of the retractable light emission unit 12, the spring steel sheet 22 is bent at an angle of about 90° between the first portion, mounted to the base plate 40, and the second portion, mounted to the housing 10.

The spring steel sheet 22 is bent along a bending line 24. Said bending line 24 acts as a pivot axis, around which the base plate 40 may pivot with respect to the housing 10. Via said pivoting motion, the retractable light emission unit 12 may be moved between the stowed position and the operating position.

As stated above, the electric motor 14, as shown in Fig. 2, can move the retractable light emission unit 12 between the stowed position and the operating position via the crankshaft 18 and the connecting rod 20. The connecting rod 20 is coupled to a crankpin 19 of the crankshaft 18 with an upper bore / upper eye, provided at a first end portion of the connecting rod 20. Further, the connecting rod 20 is coupled to the base plate 40 via a mounting fixture 54. In particular, the connecting rod 20 is coupled to a connecting pin of the mounting fixture 54 with a lower bore / lower eye, provided at a second end portion of the connecting rod 20.

When in the operating position, as depicted in Fig. 4A, the base plate 40 rests against a first abutment surface 32 of the housing 10. In particular, a forward end portion of the base plate 40, which supports the mounting fixture 54, rests against the first abutment surface 32. In the operating position, the connecting rod 20 extends substantially orthogonal to the base plate 40. In this way, with the base plate 40 being oriented substantially horizontally, the connecting rod 20 is oriented substantially vertically in the operating position of the retractable light emission unit 12. In this position, the crankpin 19 is in the lower dead center, and a comparably large torque is required for starting to move the retractable light emission unit 12. Accordingly, the retractable light emission unit 12 is in a mechanically stable position and can withstand comparably large external forces with a low holding force / holding torque, without being pushed back into the housing 10.

Fig. 4B shows the aircraft headlight 2 of Fig. 2 in the same cross-sectional plane as Fig. 4A. However, Fig. 4B shows the aircraft headlight 2 with the retractable light emission unit 12 being in the stowed position.

In the stowed position, the rearward cover portion 48 of the cover arrangement 50 is substantially flush with the mounting ring 30 of the housing 10 and, thus, with the skin of the aircraft. The base plate 40 of the retractable light emission unit 12 extends into the inside of the housing 10 at an angle of about 20° with respect to the mounting ring 30. Accordingly, the spring steel sheet 22 is bent at an angle of about 70° along the bending line 24, when the retractable light emission unit 12 is in the stowed position.

In the stowed position, as depicted in Fig. 4B, the forward end portion of the base plate 40 rests against a second abutment surface 34 of the housing 10. The crankpin 19 of the crankshaft 18 is in the upper dead center, when the retractable light emission unit 12 is in the stowed position. In this way, a mechanically highly stable position is achieved, and a comparably large torque is needed for starting to move the retractable light emission unit 12 out of the stowed position.

During the extraction and retraction of the retractable light emission unit 12, a combination of forces may act on the retractable light emission unit 12. These forces may include aero-drag, aero-lift, friction forces, and forces due to ice buildup. Also, bird strike events may lead to isolated force impacts. The configuration with the crankshaft 18 may provide for a force profile that matches the combination of expected forces particularly well. The crankshaft configuration may enable to hold the retractable light emission unit 12 in the fully extracted position and/or in the fully retracted position with a small holding force. Also, the crankshaft configuration may allow for applying a comparably large force to the retractable light emission unit 12 at the beginning of the extraction operation and/or at the beginning of the retraction operation. In this way, the combination of external forces, which is expected to be comparably high at the beginning of the extraction and retraction operations, may be overcome in a particularly good manner.

The configuration with the crankshaft 18 and the resulting force profile may be supplemented by a pre-loading of the retractable light emission unit 12 via the spring steel sheet 22. Said pre-loading may have a smoothening effect on the combination of the external forces and may help to prevent rattling of the retractable light emission unit 12. The pre-loading may provide for a desired bias towards the operating position of the retractable light emission unit 12.

The retractable light emission unit 12 may be provided with high mechanical stability, while having a very low profile / height extension. It is possible that the portion of the retractable light emission unit 12 that extends downwards from the skin of the aircraft, when the retractable light emission unit 12 is in the operating position, is less than 60 mm in height, in particular less than 50 mm in height, further in particular less than 40 mm in height, yet further in particular between 20 mm and 40 mm in height.

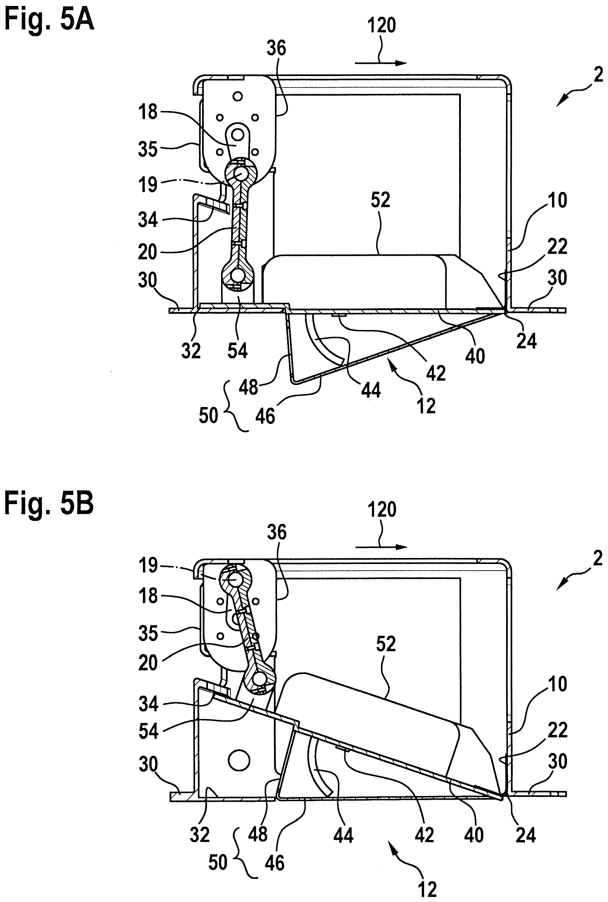

Fig. 5A shows an aircraft headlight 2 in accordance with a second exemplary embodiment of the invention in a longitudinal cross-sectional view. The cross-sectional plane of Fig. 5A is analogous to the cross-sectional plane of Fig. 4A. In Fig. 5A, the aircraft headlight 2 is depicted with the retractable light emission unit being in the operating position. The aircraft headlight 2 of Fig. 5A is very similar to the aircraft headlight described above with respect to Figs. 2, 3, 4A, and 4B. Corresponding elements are denoted with the same reference numerals, and reference is made to their description above.

The aircraft headlight 2 of Fig. 5A differs from the aircraft headlight of Figs. 2, 3, 4A, and 4B with respect to its mounting orientation in the aircraft. In particular, the movable portion of the base plate 40 is towards the rear of the aircraft headlight 2. Also, the electric motor, the crankshaft 18, and the connecting rod 20 are arranged towards the rear of the aircraft headlight 2. This is also indicated via the reversed flight direction 120, as compared to Fig. 4A.

With the mounting orientation being reversed, the mounting plate 40 of the retractable light emission unit 12 of Fig. 5A is forward hinged. The retractable light emission unit 12 of Fig. 5A has a more extended light transmissive cover portion 46 and a smaller rearward cover portion 48. The light transmissive cover portion 46 of the retractable light emission unit 12 has a smaller angle with respect to the impinging air stream in flight. This may be beneficial in some application scenarios, inter alia depending on the intended speeds at which the aircraft headlight may be used.

In order to pass the aircraft headlight light output through the extended light transmissive cover portion 46 of the exemplary embodiment of Fig. 5A, the set-up of the plurality of light sources 42 and the plurality of reflectors 44 is different, as compared to the set-up shown in Fig. 4A. In particular, the plurality of light sources 42 are arranged more towards the movable end of the base plate 40 and the plurality of reflectors 44 extend from the base plate 40 in a steeper manner. In this way, the light from the plurality of light sources 42 may be directed in desired output directions and a large portion of the light may be passed through the the light transmissive cover portion 46. The plurality of reflectors 44 may be parabolic in shape, however with a different kind of parabolic shape as compared to the plurality of reflectors of the exemplary embodiment of Figs. 4A and 4B.

Fig. 5B shows the aircraft headlight of Fig. 5A in the same longitudinal cross-sectional view as Fig. 5A, with the retractable light emission unit being in the stowed position. With respect to the movement between the operating position and the stowed position, reference is made to the description of Figs. 4A and 4B above.

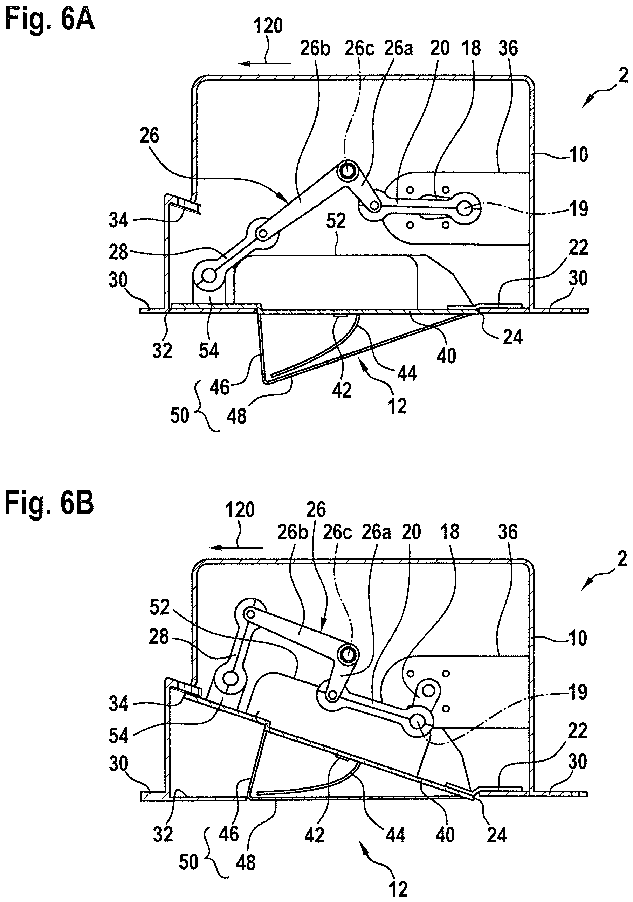

Fig. 6A shows an aircraft headlight 2 in accordance with a third exemplary embodiment of the invention in a longitudinal cross-sectional view. The cross-sectional plane of Fig. 6A is analogous to the cross-sectional plane of Fig. 4A. In Fig. 6A, the aircraft headlight 2 is depicted with the retractable light emission unit being in the operating position. The aircraft headlight 2 of Fig. 6A has many components that are similar to the aircraft headlight described above with respect to Figs. 2, 3, 4A, and 4B. Corresponding elements are denoted with the same reference numerals, and reference is made to their description above.

In the exemplary embodiment of Fig. 6A, the crankshaft 18 is not coupled to the base plate 40 via a single connecting rod. Rather, the crankshaft 18 is coupled to a bell crank 26 via a first connecting rod 20, and the bell crank 26 is coupled to the mounting fixture 54 of the base plate 40 via a second connecting rod 28. In the exemplary embodiment of Fig. 6A, the bell crank 26 has a first leg 26a and a second leg 26b. The first leg 26a and the second leg 26b are angled in a substantially orthogonal manner with respect to each other. The bell crank 26 is supported in the housing 10 in a rotational manner at a center axis 26c. The first leg 26a and the second leg 26b can rotate around the center axis 26c.

Via the bell crank 26, the motion of the first connecting rod 20 may be transferred into a motion of the second connecting rod 28 with a change in motion angle. Due to this change in motion angle, the crankshaft 18 and the first connecting rod 20 can have different positions within the housing, as compared to the positions of the crankshaft 18 and the connecting rod 20 in the exemplary embodiment of Figs. 2, 3, 4A, and 4B.

In the exemplary embodiment of Fig. 6A, the electric motor and the crankshaft 18 are arranged above the fixed portion of the base plate 40. When the retractable light emission unit 12 is in the depicted operating position, the first connecting rod 20 is substantially aligned with the base plate 40. It can also be said that the first connecting rod 20 is substantially in parallel with the bade plate 40. The crankpin 19 of the crankshaft 18 is in its first dead center, when the retractable light emission unit 12 is in the depicted operating position.

As compared to the exemplary embodiment of Figs. 2, 3, 4A, and 4B, the electric motor and the crankshaft 18 are closer to the bottom portion of the housing 10 and are supported from a side wall of the housing 10. In this way, the housing 10 of the exemplary embodiment of Fig. 6A may have a lower height than the housing of the exemplary embodiment of Figs. 2, 3, 4A, and 4B.

The bell crank 26 may serve a dual purpose. On the one hand, the bell crank 26 may facilitate a particularly low height of the aircraft headlight 2. On the other hand, the bell crank 26 may enable a desired adaptation of the forces along the coupling between the crankshaft 18 and the base plate 40 via the ratio of the lengths of the first leg 26a and the second leg 26b.

Fig. 6B shows the aircraft headlight of Fig. 6A in the same longitudinal cross-sectional view as Fig. 6A, with the retractable light emission unit being in the stowed position. It can be seen from Fig. 6B that the first connecting rod 20 is also substantially aligned with the base plate 40, when the retractable light emission unit 12 is in the depicted stowed position. The crankpin 19 of the crankshaft 18 is in its second dead center, when the retractable light emission unit 12 is in the depicted stowed position. In operation, the motion of the first connecting rod 20 moves the first leg 26a of the bell crank, which in turn moves the second leg 26b of the bell crank, which in turn moves the second connecting rod 28, and thus moves the retractable light emission unit 12 between the operating position and the stowed position.

In the depicted exemplary embodiment of Figs. 6A and 6B, the base plate 40 is horizontally hinged with respect to the housing 10. The expression of the base plate 40 being horizontally hinged means that a first portion of the spring steel sheet 22 is mounted to the base plate 40 and a second portion of the spring steel sheet 22 is mounted to a horizontal wall / horizontal portion of the housing 10. In the operating position of the retractable light emission unit 12, the spring steel sheet 22 is stretched out in a substantially flat manner along a portion of the base plate 40 and a horizontal portion of the housing 10. In the stowed position of the retractable light emission unit 12, the spring steel sheet 22 is angled at an angle of about 20° at the bending line 24.

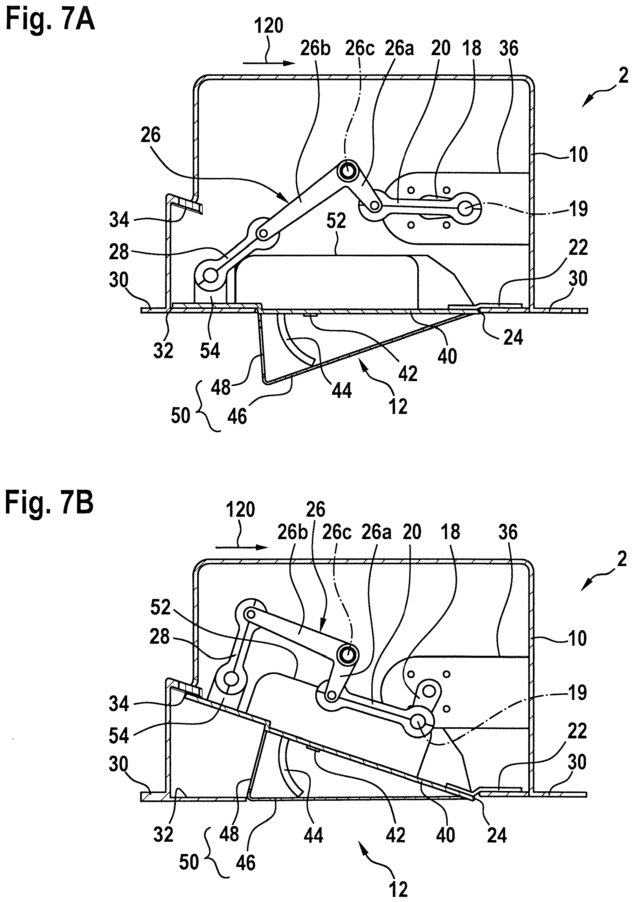

Fig. 7A shows an aircraft headlight 2 in accordance with a fourth exemplary embodiment of the invention in a longitudinal cross-sectional view. The cross-sectional plane of Fig. 7A is analogous to the cross-sectional plane of Fig. 4A. In Fig. 7A, the aircraft headlight 2 is depicted with the retractable light emission unit being in the operating position. The aircraft headlight 2 of Fig. 7A is very similar to the aircraft headlight described above with respect to Figs. 6A and 6B. Corresponding elements are denoted with the same reference numerals, and reference is made to their description above.

Fig. 7B shows the aircraft headlight of Fig. 7A in the same longitudinal cross-sectional view as Fig. 7A, with the retractable light emission unit being in the stowed position. With respect to the movement between the operating position and the stowed position, reference is made to the description of Figs. 6A and 6B above.

The aircraft headlight 2 according to the exemplary embodiment of Figs. 7A and 7B differs from the aircraft headlight 2 according to the exemplary embodiment of Figs. 6A and 6B in the same manner as the aircraft headlight 2 according to the exemplary embodiment of Figs. 5A and 5B differs from the aircraft headlight 2 according to the exemplary embodiment of Figs. 4A and 4B. Reference is made to the description of Figs. 5A and 5B above, with the discussed differences applying to the exemplary embodiment of Figs. 7A and 7B in an analogous manner.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

## Claims

1. Aircraft headlight (2), comprising:
a housing (10);
a retractable light emission unit (12), which is movable with respect to the housing (10) between a stowed position and an operating position;
an electric motor (14), which is stationary with respect to the housing (10); and
a crankshaft (18), coupled to the electric motor (14) and coupled to the retractable light emission unit (12) via a connecting rod (20);
wherein the electric motor (14) is configured to move the retractable light emission unit (12) between the stowed position and the operating position via the crankshaft (18) and the connecting rod (20).

2. Aircraft headlight (2) according to claim 1,
wherein the retractable light emission unit (12) comprises a base plate (40), which is pivotable with respect to the housing (10),
wherein the base plate (40) comprises a fixed portion, which is coupled to the housing (10), and a movable portion, and
wherein the crankshaft (18) is coupled to the movable portion via the connecting rod (20).

3. Aircraft headlight (2) according to claim 2, wherein the connecting rod (20) is substantially orthogonal with respect to the base plate (40), when the retractable light emission unit (12) is in the operating position.

4. Aircraft headlight (2) according to claim 2 or 3,
wherein the crankshaft (18) comprises a crankpin (19),
wherein the connecting rod (20) is connected to the crankpin (19),
wherein the crankpin (19) is substantially in its first dead center, when the retractable light emission unit (12) is in the stowed position, and
wherein the crankpin (19) is substantially in its second dead center, when the retractable light emission unit (12) is in the operating position.

5. Aircraft headlight (2) according to claim 2,
wherein the aircraft headlight (2) comprises a bell crank (26),
wherein the crankshaft (18) is coupled to the bell crank (26) via a first connecting rod (20), and
wherein the bell crank (26) is coupled to the movable portion of the base plate (40) via a second connecting rod (28).

6. Aircraft headlight (2) according to claim 5, wherein the first connecting rod is substantially aligned with the base plate (40), when the retractable light emission unit (12) is in the operating position.

7. Aircraft headlight (2) according to claim 5 or 6,
wherein the crankshaft (18) comprises a crankpin (19),
wherein the first connecting rod is connected to the crankpin (19),
wherein the crankpin (19) is substantially in its first dead center, when the retractable light emission unit (12) is in the stowed position, and
wherein the crankpin (19) is substantially in its second dead center, when the retractable light emission unit (12) is in the operating position.

8. Aircraft headlight (2) according to any of claims 2 to 7,
wherein the base plate (40) is hinged with respect to the housing (10) with a spring steel sheet (22).

9. Aircraft headlight (2) according to claim 8, wherein the base plate (40) is vertically hinged with respect to the housing (10), with the spring steel sheet (22) being bent at an angle of between 60° and 120°, in particular at an angle of between 70° and 110°, further in particular at an angle of between 80° and 100°, when the retractable light emission unit (12) is in the operating position.

10. Aircraft headlight (2) according to claim 8, wherein the base plate (40) is horizontally hinged with respect to the housing (10), with the spring steel sheet (22) being stretched out in a substantially flat manner, when the retractable light emission unit is in the operating position.

11. Aircraft headlight (2) according to any of the proceeding claims,
wherein the retractable light emission unit (12) comprises at least one light source (42) and at least one optical element (44), such as at least one reflector, wherein the at least one light source (42) and the at least one optical element (44) are arranged to provide an aircraft headlight light output in operation; and
wherein the retractable light emission unit (12) comprises a cover arrangement (50), arranged over the at least one light source (42) and the at least one optical element (44), wherein the cover arrangement (50) comprises a light transmissive cover portion (46) for passing the aircraft headlight light output in operation,
wherein the cover arrangement (50) is in particular shaped to be substantially flush with an outer skin of an aircraft (100), to which the aircraft headlight (2) is mountable, when the retractable light emission unit (12) is in the stowed position.

12. Aircraft headlight (2) according to any of the preceding claims, wherein the housing (10) is sized and shaped to fit into a recess in an aircraft wing (104a, 104b) and/or into recess in an aircraft wing root (114a, 114b) and/or into a recess in an aircraft fuselage (102) of an aircraft (100).

13. Aircraft headlight (2) according to any of the preceding claims, wherein the aircraft headlight (2) is a take-off light or a landing light or a runway turn-off light or a taxi light or a multi-functional aircraft headlight, comprising the functionalities of at least two of a take-off light, a landing light, a runway turn-off light and a taxi light.

14. Aircraft (100), such as an airplane, comprising at least one aircraft headlight (2) according to any of the preceding claims.

15. Aircraft (100) according to claim 14, comprising at least one of the following:
a wing-mounted aircraft headlight in accordance with any of claims 1 to 13, wherein the wing-mounted aircraft headlight is mounted to a lower portion of a wing (104a, 104b) of the aircraft (100), with the retractable light emission unit being substantially flush with a skin of the lower portion of the wing (104a, 104b) of the aircraft (100), when the retractable light emission unit is in the stowed position,
a wing-root-mounted aircraft headlight in accordance with any of claims 1 to 13, wherein the wing-root-mounted aircraft headlight is mounted to a lower portion of a wing root (114a, 114b) of the aircraft (100), with the retractable light emission unit being substantially flush with a skin of the lower portion of the wing root (114a, 114b) of the aircraft (100), when the retractable light emission unit is in the stowed position,
a fuselage-mounted aircraft headlight in accordance with any of claims 1 to 13, wherein the fuselage-mounted aircraft headlight is mounted to a lower portion of a fuselage (102) of the aircraft (100), with the retractable light emission unit being substantially flush with a skin of the lower portion of the fuselage (102) of the aircraft (100), when the retractable light emission unit is in the stowed position.
